# EUROPÄISCHE PATENTANMELDUNG

(11) **EP 4 016 212 A1**
(43) Veröffentlichungstag der Anmeldung: **22.06.2022**
(21) Anmeldenummer: 20214917.5
(22) Anmeldetag: 17.12.2020
(51) Int. Cl.: G05B 19/4093, B25J 5/00

(54) **WERKZEUGMASCHINENSYSTEM UND VERFAHREN ZUR STEUERUNG EINER MOBILEN WERKZEUGMASCHINE**

(71) Anmelder: Hilti Aktiengesellschaft, 9494 Schaan (LI)
(72) Erfinder: Lukic, Sasha, 9470 Buchs (CH); Brugger, Peter, 6800 Feldkirch (AT)
(74) Vertreter: Hilti Aktiengesellschaft Corporate Intellectual Property

(57) **Zusammenfassung**

Beschrieben wird ein Werkzeugmaschinensystem (10) für eine Baustelle (38), umfassend eine mobile Werkzeugmaschine (12), insbesondere ein Bauroboter, vorzugsweise zum Einsatz im Hoch- und/oder Tiefbau, wobei die mobile Werkzeugmaschine (12) zur Arbeit, insbesondere mit einem Werkzeug (14), an wenigstens einer Arbeitsposition (50) der Baustelle (38) eingerichtet ist, eine Steuereinheit (20) zur Steuerung der mobilen Werkzeugmaschine (12), umfassend eine Mikroprozessoreinheit (21) und eine Programmcodespeichereinheit (22), in der auf der Mikroprozessoreinheit (21) ausführbarer Programmcode speicherbar ist, sowie eine Bauteildatenspeichereinheit (24), in der wenigstens ein Bauteildatensatz zu wenigstens einem auf der Baustelle (38) zu verwendenden Bauteil (44) speicherbar ist, wobei die Steuereinheit (20) eingerichtet ist, die Arbeitsposition (50) anhand eines in der Bauteildatenspeichereinheit (24) gespeicherten Bauteildatensatzes zu bestimmen. Weiter betrifft die Erfindung ein Verfahren (100) zur Steuerung einer mobilen Werkzeugmaschine (10). Durch die Erfindung können spätere Schäden aufgrund unsachgemäßer Montage von Bauteilen (44) vermieden werden.

## Beschreibung

Die Erfindung geht aus von einem Werkzeugmaschinensystem für eine Baustelle, umfassend eine mobile Werkzeugmaschine, wobei die mobile Werkzeugmaschine zur Arbeit, insbesondere mit einem Werkzeug, an wenigstens einer Arbeitsposition der Baustelle eingerichtet ist.

In der Vergangenheit ist es immer wieder zu schweren Unfällen aufgrund auf einer Baustelle unsachgemäß montierter Bauteile gekommen. Daneben kann die Lebensdauer eines Bauwerks durch unsachgemäß montierte Bauteile erheblich verkürzt werden.

Aufgabe der vorliegenden Erfindung ist es daher, ein Werkzeugmaschinensystem für eine Baustelle mit einer mobilen Werkzeugmaschine sowie ein Verfahren zur Steuerung einer mobilen Werkzeugmaschine auf einer Baustelle anzubieten, die eine nachhaltig sichere Ausführung von Arbeiten auf der Baustelle ermöglichen.

Gelöst wird die Aufgabe durch ein Werkzeugmaschinensystem für eine Baustelle, umfassend eine mobile Werkzeugmaschine, wobei die mobile Werkzeugmaschine zur Arbeit, insbesondere mit einem Werkzeug, an wenigstens einer Arbeitsposition der Baustelle eingerichtet ist, eine Steuereinheit zur Steuerung der mobilen Werkzeugmaschine, umfassend eine Mikroprozessoreinheit und eine Programmcodespeichereinheit, in der auf der Mikroprozessoreinheit ausführbarer Programmcode speicherbar ist, sowie eine Bauteildatenspeichereinheit, in der wenigstens ein Bauteildatensatz zu wenigstens einem auf der Baustelle zu verwendenden Bauteil speicherbar ist, wobei die Steuereinheit eingerichtet ist, die Arbeitsposition anhand eines in der Bauteildatenspeichereinheit gespeicherten Bauteildatensatzes zu bestimmen.

Ein der Erfindung zugrundeliegender Gedanke ist es somit, anhand des gespeicherten Bauteildatensatzes die Arbeitsposition zu bestimmen. Unter einer solchen Bestimmung der Arbeitsposition kann insbesondere eine aktive Ermittlung der Arbeitsposition, beispielsweise eine Berechnung der Arbeitsposition oder wenigstens eine aktive Überprüfung eines vorgegebenen Positionswertes auf Tauglichkeit als zu bestimmende Arbeitsposition, insbesondere im Gegensatz zu einer Vorgabe, beispielsweise eines Benutzers des Werkzeugmaschinensystems, verstanden werden. Es ist also nicht mehr notwendig, dass der Benutzer des Werkzeugmaschinensystems die Arbeitsposition einstellt und / oder vorgibt. Dies ermöglicht es, die Arbeitsposition auf dem Bauteildatensatz abzustimmen. Umfasst der Bauteildatensatz beispielsweise eine Sicherheitsangabe, dass die Arbeitsposition einen bestimmten Abstand von einem Rand des Bauteils mindestens einzuhalten hat, so kann dies bei der Bestimmung der Arbeitsposition berücksichtigt werden. Diese Berücksichtigung kann selbsttätig durch das Werkzeugmaschinensystem, insbesondere durch die Steuereinheit, erfolgen. Es kann somit auf überraschend einfache Weise sichergestellt werden, dass ein oder mehrere Anforderungen, insbesondere Sicherheitsanforderungen, des Bauteils bei Verrichtung der Arbeit erfüllt werden. Das Risiko einer unsachgemäßen Montage des Bauteils und damit verbunden eine spätere Gefährdung von Personen oder Objekten können somit erheblich gesenkt oder sogar vollständig ausgeräumt werden.

Die mobile Werkzeugmaschine kann ein Bauroboter sein. Die mobile Werkzeugmaschine, insbesondere der Bauroboter, kann vorzugsweise zum Einsatz im Hoch- und / oder Tiefbau eingerichtet sein. Sie kann insbesondere nicht für einen Einsatz im Bergbau geeignet sein.

Das Werkzeug kann ein Bohrwerkzeug, ein Meißelwerkzeug, ein Schneidwerkzeug, ein Sägewerkzeug, ein Setzwerkzeug, beispielsweise zum Setzen eines Verbindungselements, beispielsweise eine Schraube oder ein Nagel, ein Schleifwerkzeug oder ein Markierwerkzeug, beispielsweise eine Sprühdüse umfassend, sein und/oder ein solches Werkzeug umfassen.

Das zu verwendende Bauteil kann eine Wand, eine Decke oder ein Boden der Baustelle, beispielsweise eines zu errichtenden Bauwerks, sein. Das Bauteil kann auch ein Bauelement sein. Beispielsweise kann das Bauteil ein Deckenelement, ein Wandelement, ein Installationselement, ein Verbindungselement, beispielsweise ein Schraubanker, oder dergleichen sein.

Die Steuereinheit kann einen Teil der mobilen Werkzeugmaschine bilden. Sie kann auch separat von der mobilen Werkzeugmaschine, insbesondere separat von der übrigen Steuereinheit, ausgebildet sein. Wenigstens ein Teil der Steuereinheit kann tragbar ausgebildet sein.

Der Bauteildatensatz kann eine Bauteilart, zum Beispiel der Art eines Deckenelement, ein Material, beispielsweise Stahl oder Beton, und / oder eine Maßangabe, beispielsweise einer Abmessung, umfassen. Denkbar ist, dass der Bauteildatensatz eine Maßangabe zu einer relativen Arbeitsposition innerhalb der betreffenden Bauteilart umfasst.

Bei einer weiteren Ausgestaltung der Erfindung kann die Steuereinheit eingerichtet sein, die Arbeitsposition unter Verwendung eines Baustellendatensatzes einer Baustellendatenspeichereinheit zu bestimmen. Dazu kann die Steuereinheit eine Baustellendatenspeichereinheit, in der wenigstens ein Baustellendatensatz speicherbar ist, umfassen. Der Baustellendatensatz kann einem Ist-Wert oder einem Soll-Wert entsprechen. Beispielsweise kann der Baustellendatensatz aus einer Building Information Model (BIM)-Planung stammen.

Während der Bauteildatensatz somit eine auf das Bauteil bezogenen Angabe umfassen kann, kann der Baustellendatensatz eine auf die Baustelle bezogene Angabe umfassen.

Somit können Sicherheitsanforderungen bei der Bestimmung der Arbeitsposition berücksichtigt werden, die sich aus dem Zusammenspiel des Bauteils mit der Baustelle ergeben.

Beispielsweise kann eine Anforderung sein, dass das Bauteil, beispielsweise ein Tragelement, nur mit einem bestimmten Mindestabstand von einem Rand einer Wand montiert werden darf. Dann kann der Baustellendatensatz eine Maßangabe zu der Wand, beispielsweise zu der Position und / oder der Lage der Wand, insbesondere ihrer Ränder, umfassen. Der Bauteildatensatz kann eine Angabe der Bauteilart, hier also der Art des Tragelement, umfassen. Ein weiterer Bauteildatensatz kann eine Angabe zu einer Relativposition und einer Relativlage einer Bohrung im Tragelement relativ zu einem Eckpunkt des Tragelements umfassen. Somit kann eine Arbeitsposition, insbesondere eine Bohrposition innerhalb der Wand anhand der Bauteildatensätze in Verbindung mit dem Baustellendatensatz durch geeignete Summation bestimmt werden, sodass die Anforderung bezüglich des Mindestabstands eingehalten wird. Die Steuereinheit kann auch eingerichtet sein, die Arbeitsposition unter Verwendung eines Regeldatensatzes einer Regeldatenspeichereinheit zu bestimmen. Hierzu kann die Steuereinheit eine Regeldatenspeichereinheit, in der wenigstens ein Regeldatensatz speicherbar ist, umfassen. Der Regeldatensatz kann Regeln zum relativen Verhältnis wenigstens zweier Bauteile zueinander und / oder zum relativen Verhältnis wenigstens eines Bauteils zur Baustelle umfassen. Beispielsweise kann der Regeldatensatz eine Regel zur flächenhaften Anordnung des oder der Bauteile innerhalb der Baustelle umfassen. Der Regeldatensatz kann auch eine Angabe zu einer Sicherheitsanforderung, beispielsweise zu der vorangehend genannten Anforderung, umfassen. Durch einen solchen Regeldatensatz ist es auf besonders einfache Weise möglich, dass das Werkzeugmaschinensystem, insbesondere die Steuereinheit, eingerichtet ist, mehrere Arbeitspositionen, beispielsweise unterschiedlicher Bauteile, gemäß einer in Form eines Regeldatensatz vorliegenden Regel zu bestimmen. Somit ist es möglich, dass das Werkzeugmaschinensystem nicht nur Sicherheitsanforderungen, sondern auch andere Anforderungen wie beispielsweise ästhetische Anforderungen oder dergleichen bei der Bestimmung wenigstens einer Arbeitsposition berücksichtigt.

Die Steuereinheit kann eingerichtet sein, die Arbeitsposition dadurch zu bestimmen, dass eine vordefinierte Soll-Arbeitsposition, insbesondere unter Verwendung des Bauteildatensatzes, des Baustellendatensatzes und / oder des Regeldatensatzes, modifiziert wird. Denkbar ist insbesondere, dass die Arbeitsposition in Form der Soll-Arbeitsposition bereits vordefiniert vorliegt. Beispielsweise kann die Soll-Arbeitsposition aus einem BIM-Planungssystem stammen.

Das Werkzeugmaschinensystem, insbesondere die Steuereinheit, kann dazu eingerichtet sein, die Soll-Arbeitsposition mit dem Bauteildatensatz und / oder mit dem Baustellendatensatz abzugleichen. Sie kann insbesondere eingerichtet sein zu ermitteln, ob alle für die zu bestimmende Arbeitsposition relevanten Anforderungen, einschließlich der Regeln des Regeldatensatzes, gleichzeitig erfüllbar und / oder erfüllt sind.

Sind alle Anforderungen bereits erfüllt, kann die Soll-Arbeitsposition unverändert als zu bestimmende Arbeitsposition vom Werkzeugmaschinensystem, insbesondere von der Steuereinheit, übernommen werden.

Stehen unterschiedliche Anforderungen in einem gegenseitigen, unauflösbaren Konflikt, kann das Werkzeugmaschinensystem, insbesondere die Steuereinheit, eingerichtet sein, selbsttätigen ein Konfliktlösungsverfahren zu durchlaufen und / oder eine Interaktion des Benutzers des Werkzeugmaschinensystems anzufordern.

Steht die Soll-Arbeitsposition in Konflikt mit einer oder mehreren der Anforderungen, so kann das Werkzeugmaschinensystem, insbesondere die Steuereinheit, eingerichtet sein, einen Versatz zu bestimmen, sodass bei Verschieben der Soll-Arbeitsposition um den Versatz alle Anforderungen erfüllt sind. Das Werkzeugmaschinensystem, insbesondere die Steuereinheit, kann, insbesondere im üblichen Falle, dass unterschiedliche Versätze möglich sind, eingerichtet sein, unter allen möglichen Versätzen den Versatz mit der geringstmöglichen Versatzdistanz zu ermitteln. Alternativ oder ergänzend ist für diesen Fall denkbar, dass das Werkzeugmaschinensystem, insbesondere die Steuereinheit, eingerichtet ist, eine entsprechende Auswahl eines Versatzes von einem Benutzer abzufragen.

Die zu bestimmende Arbeitsposition kann somit durch Modifikation der Soll-Arbeitsposition, insbesondere entsprechend der Position, die sich nach Verschieben der Soll-Arbeitsposition um den ermittelten Versatz ergibt, bestimmt sein oder werden.

Bei einer besonders vorteilhaften Klasse von Ausführungsform der Erfindung weist die Steuereinheit einen Erfassungssensor zur Erfassung wenigstens eines Bauteildatensatzes und / oder eines Baustellendatensatzes auf.

Insbesondere kann der Erfassungssensor eine Bildaufnahmeeinheit, beispielsweise eine optische Kamera, zur Aufnahme eines ein-, zwei- und / oder drei-dimensionalen Bildes umfassen. Alternativ oder ergänzend kann der Erfassungssensor einen Distanzmesser umfassen. Der Distanzmesser kann ein Laserdistanzmesser sein. Der Erfassungssensor kann an der Steuereinheit und / oder an der mobilen Werkzeugmaschine angeordnet sein. Alternativ kann er auch unabhängig von der Steuereinheit und / oder unabhängig von der mobilen Werkzeugmaschine, insbesondere auf der Baustelle, angeordnet sein.

Der Erfassungssensor kann eingerichtet sein, den Bauteildatensatz und / oder den Baustellendatensatz selbsttätig zu ermitteln.

Dazu kann das die Steuereinheit eine Analyseeinheit zur Analyse des Bildes umfassen.

Somit kann die Steuereinheit eingerichtet sein, das Bauteil zu erkennen und / oder eine Position, eine Lage und / oder eine Abmessung des Bauteils innerhalb der Baustelle zu ermitteln. Die Steuereinheit kann auch eingerichtet sein, die Baustelle zu erkennen und / oder eine Position, eine Lage und / oder eine Abmessung innerhalb der Baustelle zu erkennen. Beispielsweise kann so das Werkzeugmaschinensystem, insbesondere die Steuereinheit und vorzugsweise unter Verwendung des Erfassungssensors, eingerichtet sein, wenigstens eine Abmessung eines auf der Baustelle befindlichen Raums, einer Wand, einer Decke und / oder eines Fußbodens zu ermitteln.

Vorzugsweise ist die Analyseeinheit selbstlernend ausgebildet. Sie kann dazu ein künstliches neuronales Netz, beispielsweise in Form einer Deep-Learning-Einheit, umfassen.

Das erfindungsgemäße Werkzeugmaschinensystem lässt sich besonders bei häufig wiederkehrenden Arbeiten einsetzen.

Daher ist es günstig, wenn die mobile Werkzeugmaschine zum Bohren, Hammerbohren und / oder Meißeln eingerichtet ist.

Dabei ist besonders vorteilhaft, dass ein beispielsweise zum Bohren und / oder Hammerbohren eingerichtetes, erfindungsgemäßes Werkzeugmaschinensystem eine vorausschauende Umsetzung von Arbeiten ermöglicht. Insbesondere kann das Werkzeugmaschinensystem , beispielsweise durch geeignete Regeldatensätze, eingerichtet sein zu erkennen, dass eine der Soll-Arbeitspositionen von Bohrungen zu modifizieren ist, und dass dazu alle mit dieser Soll-Arbeitsposition in Beziehung stehenden Bohrungen entsprechend zu verändern sind, sodass im Endeffekt Bauteile trotz Modifikation der Soll-Arbeitspositionen ordnungsgemäß und in sich stimmig montiert werden können.

Beispielsweise kann das Werkzeugmaschinensystem in Bezug auf ein erstes Deckenelement erkennen, dass das erste Deckenelement an einer gegenüber einer in einer BIM-Planung definierten Position in der Realität zu versetzen ist, da sich die Decke, an der das Deckenelement montiert werden soll, ebenfalls in der Realität an einer gegenüber der BIM-Planung geänderten Position befindet. Dann kann das erfindungsgemäße Werkzeugmaschinensystem eingerichtet sein, zusätzlich auch alle anderen an der Decke zu montierenden Deckenelemente bzw. die für die Montage der Deckenelemente benötigten Bohrungen entsprechend zu versetzen, sodass im Endeffekt die Deckenelemente zwar gegenüber der BIM-Planung versetzt, jedoch in sich stimmig und allen Anforderungen entsprechend an der Decke ohne weitere Nacharbeiten montierbar sind.

Hierdurch wird auch ein möglichst hochgradig automatisierter Betrieb des Werkzeugmaschinensystems ermöglicht.

Bei bisher bekannten Systemen bestand dagegen das Problem, dass aufgrund ungeeignet gesetzter Bohrungen entstehende Montageprobleme zum Teil erst zu einem viel späteren Zeitpunkt erkannt werden konnten und zu erheblichen Rückbau- und Nacharbeiten führten. Somit beschränkten derartige Unterbrechungen und notwendige manuelle Eingriffe den bisher erreichbaren Automatisierungsgrad bei Baurobotern.

Denkbar ist auch, dass die mobile Werkzeugmaschine eingerichtet ist, das zur Ausführung der Arbeit zu verwendende Werkzeug aus einem Satz von Werkzeugen auszuwählen. Dazu kann die mobile Werkzeugmaschine mit einem Werkzeugwechselsystem ausgestattet sein. Sie kann auch eine Werkzeugablage zur Ablage ein oder mehrerer Werkzeuge aufweisen.

Besonders bevorzugt kann die mobile Werkzeugmaschine eingerichtet sein, das zur Ausführung der Arbeit zu verwendende Werkzeug anhand des Bauteildatensatzes und / oder anhand des Baustellendatensatzes auszuwählen. Somit kann die mobile Werkzeugmaschine beispielsweise eingerichtet sein, ein Bohrwerkzeug geeigneter Größe in Abhängigkeit von einem Bauteildatensatz, in dem ein Durchmesser eines in das Bauteils einzubringenden Bohrlochs gespeichert ist, aus einem Satz von Bohrwerkzeugen unterschiedlicher Größe auszuwählen.

Ein besonders breites Anwendungsgebiet ergibt sich für das Werkzeugmaschinensystem, wenigstens ein Element des Werkzeugmaschinensystems, insbesondere die mobile Werkzeugmaschine oder die Steuereinheit oder zumindest ein Teil der Steuereinheit, kabellos betreibbar ist. Sie kann dazu wenigstens einen wiederaufladbaren Akkumulator, beispielsweise einen lithium-basierten Akkumulator, und / oder eine Brennstoffzelle, aufweisen.

Zur Kommunikation mit einem Benutzer kann die Steuereinheit eine Displayeinheit aufweisen. Die Displayeinheit kann zur Anzeige der Arbeitsposition eingerichtet sein.

Aus Sicherheitsgründen kann die Steuereinheit kann eingerichtet sein, die Arbeit der mobilen Werkzeugmaschine erst nach einer positiven Quittierung eines Benutzers zu starten.

Bei einer besonders benutzerfreundlichen Ausführungsform der Erfindung kann die Steuereinheit eine Displayeinheit, insbesondere zur Darstellung eines Augmented-Reality- (AR-) Bildes, aufweisen. Das AR-Bild kann in Form eines Mixed-Reality- (MR-) Bildes oder in Form eines Virtual-Reality- (VR-) Bildes ausgebildet sein. Insbesondere kann die Steuereinheit eingerichtet sein, die bestimmte Arbeitsposition und / oder einen Vergleich zwischen der Soll-Arbeitsposition und der Arbeitsposition abzubilden.

Wenigstens ein Element der Steuereinheit kann Cloud-basiert ausgebildet sein. Das wenigstens eine Element kann über ein Netzwerk, beispielsweise ein mobilfunkbasiertes Netzwerk oder allgemein das Internet, mit dem übrigen Werkzeugmaschinensystem verwendbar und / oder mit dem übrigen Werkzeugmaschinensystem verbindbar oder verbunden sein.

Wenigstens zwei der Speichereinheiten können mit Hilfe von wenigstens einem gemeinsam verwendeten elektronischen Bauteil ausgebildet sein. Insbesondere können zwei oder mehr der Speichereinheiten mittels derselben Speicherbauteile ausgebildet sein.

Denkbar ist insbesondere, dass die Bauteildatenspeichereinheit oder zumindest ein Teil der Bauteildatenspeichereinheit in einem oder mehreren, entfernten, insbesondere Cloud-basierten, Speichersystemen ausgebildet ist. So ist denkbar, dass die Bauteildatenspeichereinheit als Teil einer oder mehrerer Bauteildatenbanken oder zumindest zum Teil aus der einen oder den mehreren Bauteildatenbanken eines oder mehrerer Hersteller von Bauteilen ausgebildet ist.

In den Rahmen der Erfindung fällt des Weiteren ein Verfahren zur Steuerung einer mobilen Werkzeugmaschine, insbesondere ein Bauroboter, vorzugsweise zum Einsatz im Hoch- und / oder Tiefbau, auf einer Baustelle, wobei die mobile Werkzeugmaschine zur Arbeit, insbesondere mit einem Werkzeug, an wenigstens einer Arbeitsposition der Baustelle eingerichtet ist, wobei die Arbeitsposition anhand eines Bauteildatensatzes bestimmt wird.

Analog zum erfindungsgemäßen Werkzeugmaschinensystem erlaubt daher auch das erfindungsgemäße Verfahren, dass die Arbeitsposition selbsttätig bestimmt wird anstatt dass diese von einem Benutzer des Verfahrens bzw. der mobilen Werkzeugmaschine vorzugeben ist.

Somit lassen sich verfahrensgemäß wiederum Anforderungen, insbesondere Sicherheitsanforderungen, bei der Bestimmung der Arbeitsposition berücksichtigen, sodass sich wiederum die eingangs genannten Risiken ebenfalls verringern oder ausräumen lassen.

Es ist auch denkbar, dass die Arbeitsposition anhand eines Baustellendatensatzes bestimmt wird. Sie kann somit insbesondere anhand des Bauteildatensatzes und anhand des Baustellendatensatzes bestimmt werden.

Um allfälligen Abweichungen der Realität von BIM-Planungsdaten zu begegnen, kann die Arbeitsposition auch dadurch ermittelt werden, dass eine vordefinierte Soll-Arbeitsposition, insbesondere unter Verwendung des Bauteildatensatzes, des Baustellendatensatzes und / oder des Regeldatensatzes, modifiziert wird.

Für einen derartigen Soll-/lst-Abgleich kann der Bauteildatensatz und / oder der Baustellendatensatz mittels eines Erfassungssensors des Werkzeugmaschinensystems, insbesondere der Steuereinheit, ermittelt werden.

Die Steuereinheit kann auch eingerichtet sein, anhand des Bauteildatensatzes, des Baustellendatensatzes und / oder des Regeldatensatzes wenigstens einen weiteren Parameter der Arbeit der mobilen Werkzeugmaschine neben der Arbeitsposition zu steuern. Dieser weitere Parameter kann beispielsweise eine Werkzeugart, eine Werkzeugabmessung, eine Anpresskraft, eine Geschwindigkeit, beispielsweise eine Vortriebsgeschwindigkeit, ein Drehmoment oder dergleichen sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: ein Werkzeugmaschinensystem;
- Fig. 2: eine schematische Darstellung des Werkzeugmaschinensystems in einem ersten Beispiel einer Bestimmung von Arbeitspositionen;
- Fig. 3: eine schematische Darstellung des Werkzeugmaschinensystems bei einem zweiten Beispiel einer Bestimmung von Arbeitspositionen; und
- Fig. 4: ein Flussdiagramm eines Verfahrens.

In der nachfolgenden Beschreibung der Figuren werden zur Erleichterung des Verständnisses der Erfindung für gleiche oder sich funktional entsprechende Elemente jeweils die gleichen Bezugszeichen verwendet.

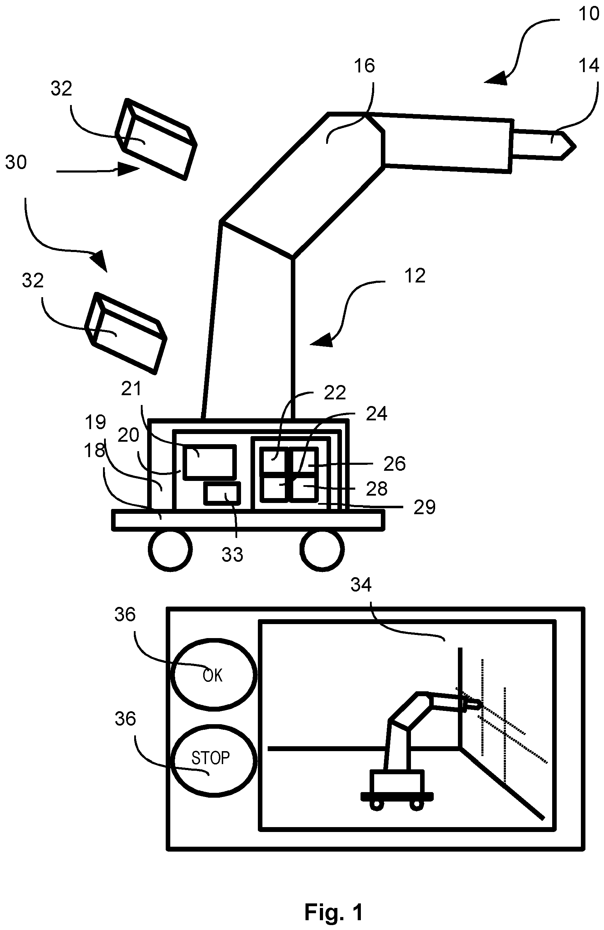

**Fig. 1** zeigt in einer schematischen Darstellung ein Werkzeugmaschinensystem **10.** Das Werkzeugmaschinensystem 10 weist eine mobile Werkzeugmaschine **12** auf, die als Bauroboter zum Einsatz im Hoch- und Tiefbau eingerichtet ist. Insbesondere ist die mobile Werkzeugmaschine 12 zur Arbeit an wenigstens einer Arbeitsposition einer Baustelle eingerichtet; sie ist mit einem Bohrwerkzeug **14** ausgestattet und kann somit Bohrarbeiten verrichten.

Das Bohrwerkzeug 14 ist an einem mehrachsigen Manipulator **16** der mobilen Werkzeugmaschine 12 angeordnet. Mit Hilfe eines Fahrwerks **18** kann sich die mobile Werkzeugmaschine 12 auf einer Baustelle, vorzugsweise selbsttätig oder zumindest ferngesteuert, fortbewegen.

In einem Gehäuse **19** des Fahrwerks 18 ist eine Steuereinheit **20** zur Steuerung der mobilen Werkzeugmaschine 12 untergebracht. Die Steuereinheit 20 ist als Rechnereinheit ausgebildet.

Die Steuereinheit 20 umfasst eine Mikroprozessoreinheit **21,** eine Programmcodespeichereinheit **22,** in der auf der Mikroprozessoreinheit 21 ausführbarer Programmcode speicherbar ist, sowie eine Bauteildatenspeichereinheit **24,** in der wenigstens ein Bauteildatensatz zu wenigstens einem auf der Baustelle zu verwendenden Bauteil speicherbar ist.

Die Steuereinheit 20 weist ferner eine Baustellendatenspeichereinheit **26** zur Speicherung wenigstens eines Baustellendatensatzes sowie eine Regeldatenspeichereinheit **28,** in der wenigstens ein Regeldatensatz speicherbar ist. Die Speichereinheiten 22, 24, 26 und 28 sind gesamtheitlich durch eine Gesamtspeichereinheit **29,** beispielsweise eine nichtflüchtige, schreib- und lesbare Speichereinheit, realisiert.

Die mobile Werkzeugmaschine 12 weist des Weiteren einen Erfassungssensor **30** auf. Der Erfassungssensor 30 ist durch zwei Bildaufnahmeeinheiten **32** ausgebildet, die es zusammen ermöglichen, dreidimensionale Bilder der Umgebung aufzunehmen. Anhand der dreidimensionalen Bilder können insbesondere Längen, beispielsweise Distanzen, ermittelt werden.

Zur Analyse aufgenommener Bilder ist in der Steuereinheit 20 eine Analyseeinheit **33** ausgebildet. Dazu weist die Steuereinheit 20 eine Deep-Learning-Einheit auf.

Das Werkzeugmaschinensystem 10 weist des Weiteren eine Displayeinheit **34** auf, die als Teil der Steuereinheit 20, jedoch unabhängig von der übrigen Steuereinheit 20, insbesondere tragbar, ausgebildet ist. Sie ist über eine Funkverbindung mit der übrigen Steuereinheit 20 verwendbar.

Die Displayeinheit 34 ist eingerichtet, VR-Bilder darzustellen. Sie weist ferner zwei Eingabetasten **36** auf, mit denen der Benutzer des Werkzeugmaschinensystems 10 bestimmte Arbeitspositionen quittieren und damit die Ausführung von Arbeiten starten oder verhindern kann.

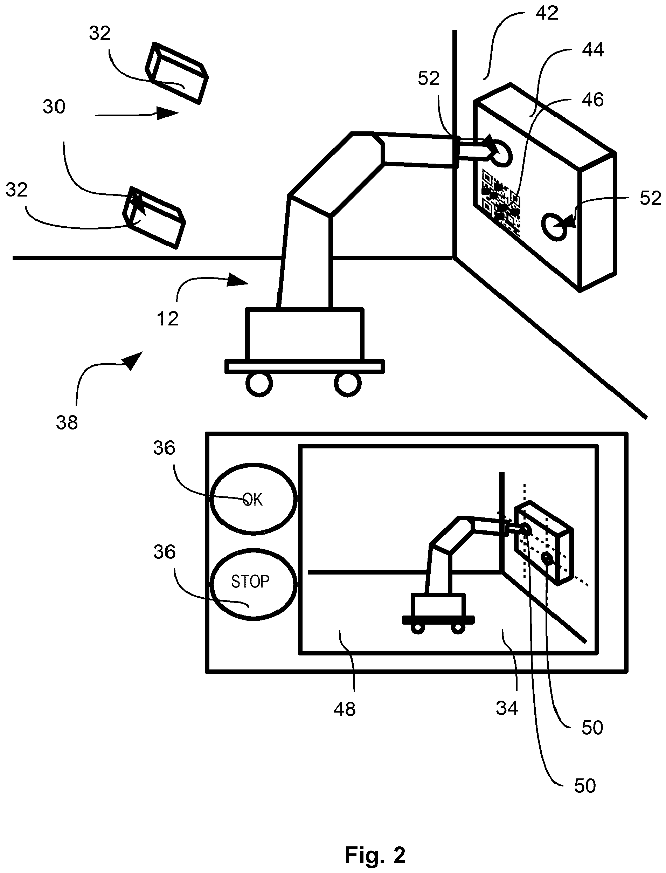

**Fig. 2** zeigt in einer schematischen Darstellung eine Bestimmung von Arbeitspositionen mithilfe des vorangehend beschriebenen Werkzeugmaschinensystems 10.

In der schematischen Darstellung gemäß Fig. 2 ist eine Baustelle **38** zu erkennen, auf der an einer Wand **42** ein Bauteil **44** zu bearbeiten ist. Das Bauteil 44 kann beispielsweise ein Wandverkleidungselement sein.

Durch das Bauteil 44 hindurch und in die Wand 42 hinein sollen im vorliegenden Beispiel zwei Bohrlöcher eingearbeitet werden.

Das Bauteil 44 weist einen Code **46** auf, anhand dessen und mithilfe des Erkennungssensors 30 die Steuereinheit 20 das Bauteil 44 erkennt.

Mithilfe des Codes 46 ruft die Steuereinheit 20 (siehe Fig. 1) aus der Bauteildatenspeichereinheit 24 (ebenfalls Fig. 1) Bauteildatensätze zu dem Bauteil 44 ab.

Die Bauteildatensätze können insbesondere Angaben zu Positionen, an denen Bohrlöcher zu fertigen sind, umfassen. Zusätzlich werden über den Erfassungssensor 30 Baustellendatensätze zur Baustelle 38, insbesondere zur Wand 42, erfasst.

Die Baustellendatensätze umfassen dabei beispielsweise die Position und die Lage der Wand 42 sowie die Relativposition des Bauteils 44 relativ zur Wand 42.

Mithilfe der Bauteildatensatzsätze sowie der Baustellendatensätze werden sich aus diesen Datensätzen ergebende Arbeitspositionen bestimmt, insbesondere berechnet.

Das Ergebnis wird auf der Displayeinheit 34 in Form eines VR-Bildes **48** dargestellt. Im VR-Bild 48 ist zunächst ein Abbild der Baustelle 38 zu erkennen. Zusätzlich sind - in Form von Fadenkreuzen - Arbeitspositionen **50** im VR-Bild 48 abgebildet. Zusätzlich zu den Fadenkreuzen umfassen die abgebildeten Arbeitspositionen 50 Darstellungen der zu erstellenden Bohrlöcher.

Quittiert nun der Benutzer des Werkzeugmaschinensystems 10 die bestimmten Arbeitspositionen 50 auf einer der Tasten 36, insbesondere auf der mit "OK" markierten Taste 36, so steuert die Steuereinheit 20 die mobile Werkzeugmaschine 12 derart an, dass diese an den bestimmten Arbeitspositionen 50 die gewünschten Bohrungen bohrt.

Konkret ist in Fig. 2 eine Situation dargestellt, bei der das Werkzeugmaschinensystem 10 just die Bohrarbeiten abgeschlossen hat, sodass zwei Bohrlöcher **52** durch das Bauteil 44 hindurch und in die Wand 42 hinein gebohrt sind.

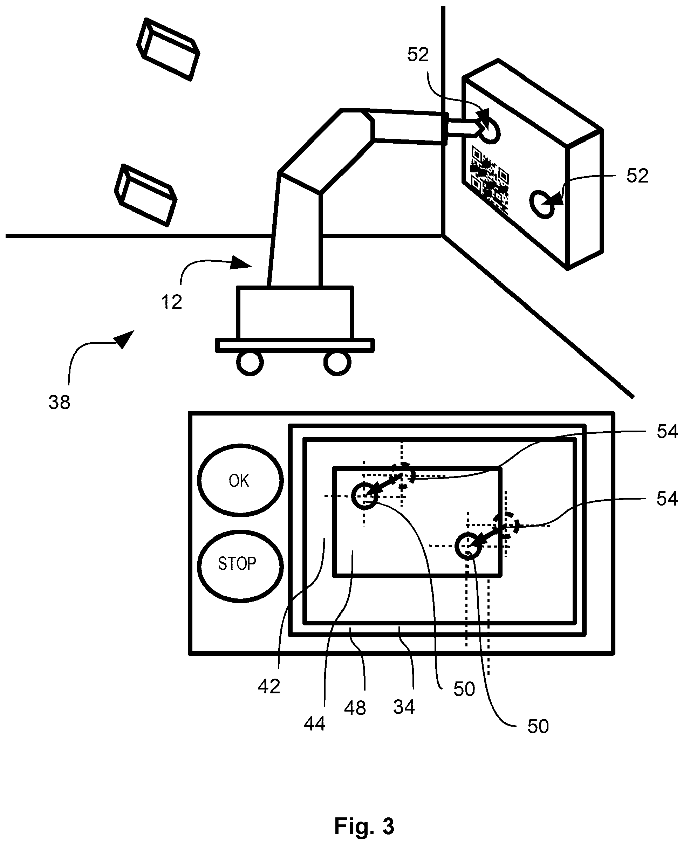

**Fig. 3** zeigt, ebenfalls in schematischer Darstellung, ein weiteres Beispiel einer Bestimmung von Arbeitspositionen.

Im Unterschied zu der Situation gemäß Fig. 2 liegen in der Fig. 3 zugrunde liegenden Situation Soll-Arbeitspositionen aus einem BIM-Planungssystem vor. Diese Soll-Arbeitspositionen sind in Form von Baustellendatensätzen in der Baustellendatenspeichereinheit 26 (siehe Fig. 1) gespeichert.

Soweit nicht anders beschrieben, entspricht das Werkzeugmaschinensystem 10 dem vorangehend beschriebenen Werkzeugmaschinensystem 10, wobei dieses Werkzeugmaschinensystem 10 dahingehend gegenüber dem vorangehend beschriebenen modifiziert ist, dass es Arbeitspositionen ausgehend von wenigstens einer vorgegebenen Soll-Arbeitsposition bestimmen kann.

Es versteht sich, dass das Werkzeugmaschinensystem 10 eingerichtet sein kann, Arbeitspositionen je nach Vorliegen von Soll-Arbeitspositionen sowohl mit als auch ohne diesen zu bestimmen.

Wie in der Darstellung gemäß Fig. 3 zu erkennen ist, zeigt in diesem Fall das VR-Bild 48 eine schematische Draufsicht auf die Wand 42 mit dem Bauteil 44. Alternativ oder ergänzend ist auch denkbar, dass das Werkzeugmaschinensystem 10 auf der Displayeinheit 34 ein VR-Bild 48 nach Art des vorangehend beschriebenen Ausführungsbeispiels darstellt. Auch Mischungen der Darstellungsarten oder andere Darstellungsarten sind denkbar.

Entsprechend der vom Erkennungssensor 30 erfassten Position und Lage der Wand 42 werden die resultierenden Positionen der Soll-Arbeitspositionen **54** schematisch innerhalb des V-Bildes 48 dargestellt. Zu erkennen ist, dass sich die Soll-Arbeitspositionen 54 zu dicht an Rändern des Bauteils 44 befinden.

Es bestehen Konflikte mit in der Bauteildatenspeichereinheit 24 gespeicherten Bauteildatensätzen für das Bauteil 44, nach denen die Bohrlöcher mit bestimmten Mindestabständen von den Rändern sowie mit bestimmten Höchstabständen von den Rändern des Bauteils 44 zu fertigen sind.

Die Steuereinheit 20 ist daher eingerichtet, einen Versatz ausgehend von den Soll-Arbeitspositionen 54 vorzusehen, mit dessen Hilfe die Steuereinheit 20 die finalen Positionen der Arbeitspositionen 50 bestimmt. Diese bestimmten Arbeitspositionen 50 sind ebenfalls in der Displayeinheit 34 abgebildet.

Nach Quittierung durch den Benutzer werden wiederum die geplanten Bohrlöcher 52 an den den bestimmten Arbeitspositionen 50 entsprechenden Positionen gebohrt.

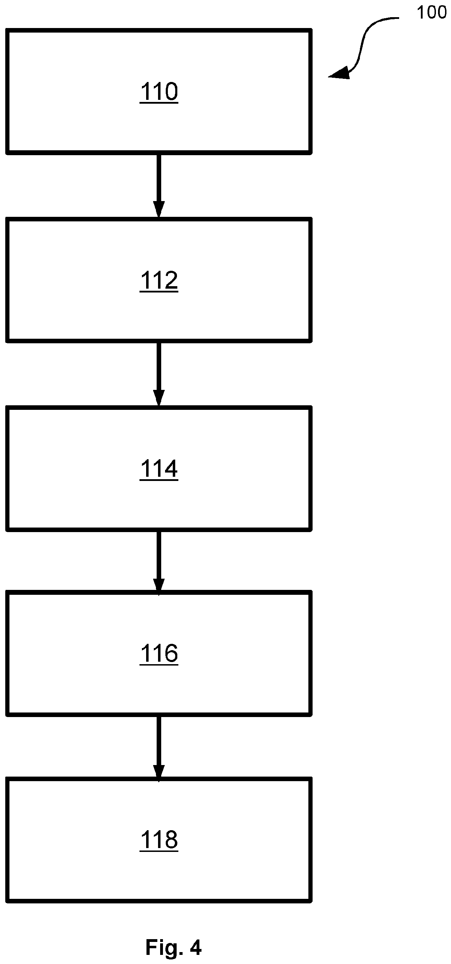

**Fig. 4** zeigt ein Verfahren **100** in Form eines Flussdiagramms. Zur Erläuterung des Verfahrens 100 wird im Folgenden in Bezug auf das Werkzeugmaschinensystem 10 sowie in Bezug auf die Baustelle 38 auf die vorangehend eingeführten Bezugszeichen zurückgegriffen.

In einem ersten Schritt **110** ruft das Werkzeugmaschinensystem 10, insbesondere die Steuereinheit 20, in einem Cloud-basierten Speicher gespeicherte Bauteildatensätze zu unterschiedlichen Bauteilen ab. Ferner werden Baustellendatensätze aus einem BIM-Planungssystem in die Baustellendatenspeichereinheit 26 geladen.

In einem nachfolgenden Schritt **112** werden mehrere Bauteildatensätze mittels des Erfassungssensors 30 und der Analyseeinheit 33 erfasst. Insbesondere werden der Typ des Bauteils 44 sowie dessen Position und Lage ermittelt. Zusätzlich werden Baustellendatensätze der Baustelle 38 mittels des Erfassungssensor 30 und der Analyseeinheit 33 erfasst. Insbesondere werden die Position und die Lage der Wand 42 ermittelt.

In einem weiteren Schritt **114** werden die Arbeitspositionen 50 anhand der Bauteil- und der Baustellendatensätze bestimmt. Liegen Soll-Arbeitspositionen 54 vor, werden diese anhand der Bauteildatensätze und unter Berücksichtigung der Baustellendatensatzes auf Konflikte geprüft.

Wird ein Konflikt festgestellt, so wird die jeweils betreffende Arbeitsposition 50 durch Bestimmung einer geringsten, erforderlichen Verschiebung der Soll-Arbeitsposition 54 bestimmt, um den betreffenden Konflikt auszuräumen.

Liegen Regeldatensätze vor, die vorzugsweise in der Regelspeichereinheit 28 gespeichert sein können, so werden die damit verbundenen Regeln durch die Steuereinheit 20 zusätzlich geprüft.

Beispielsweise kann ein Regeldatensatz vorliegen, der eine Anordnung des Bauteils 44 nur an bestimmten Positionen oder in Form eines bestimmten Musters innerhalb der Baustelle 38 vorsieht.

Wird diese Regel bei der aktuell bestimmten Arbeitsposition 50 nicht erfüllt, so wird die Arbeitsposition 50 zusätzlich modifiziert, sodass auch alle Regeln entsprechend aller betreffenden Regeldatensätze erfüllt sind bzw. werden. Sollte ausnahmsweise die Gesamtheit der zu berücksichtigenden Anforderungen gemäß der Bauteildatensätze, der Baustellendatensätze und der Regeldatensätzen nicht konfliktfrei erfüllbar ist, kann vorgesehen sein, dass das die Steuereinheit 20 eine Interaktion des Benutzers zur Entscheidung des weiteren Vorgehens abzufragen.

In einem weiteren Schritt **116** werden die bestimmten Arbeitspositionen 50, sowie gegebenenfalls die Soll-Arbeitspositionen 54 sowie deren Verschiebung auf der Displayeinheit 34 als VR-Bild 48 dargestellt. Anschließend wird eine Quittierung mittels der Tasten 36 durch den Benutzer abgewartet.

Je nach Ausgang der Quittierung durch den Benutzer werden sodann in einem abschließenden Schritt **118** Bohrlöcher 52 bzw. allgemein Arbeiten an den den bestimmten Arbeitspositionen 50 entsprechenden Positionen innerhalb der Baustelle 38 ausgeführt oder eine Ausführung der Arbeiten geblockt.

Es versteht sich, dass die Interaktionen im Schritt 116 mit dem Benutzer, insbesondere die Darstellungen auf der Displayeinheit 34 und / oder das Einholen der Quittierung, optional sind.

Insbesondere kann auf den Schritt 116 verzichtet werden, wenn das Werkzeugmaschinensystem 10 ausgebildet sein soll, während des Ablaufs des Verfahrens 100 vollständig autonom und insbesondere ohne Interaktion mit dem Benutzer zu agieren.

Nach Abschluss der Arbeiten kann vorgesehen sein, dass das Verfahren erneut, insbesondere beginnend mit Schritt 110, durchgeführt wird, bis alle zu bearbeitenden Arbeitspositionen 50 bestimmt und die entsprechenden Arbeiten ausgeführt sind.

### Bezugszeichenliste

- 10: Werkzeugmaschinensystem
- 12: mobile Werkzeugmaschine
- 14: Bohrwerkzeug
- 16: Manipulator
- 18: Fahrwerk
- 19: Gehäuse
- 20: Steuereinheit
- 21: Mikroprozessoreinheit
- 22: Programmcodespeichereinheit
- 24: Bauteildatenspeichereinheit
- 26: Baustellendatenspeichereinheit
- 28: Regeldatenspeichereinheit
- 29: Gesamtspeichereinheit
- 30: Erfassungssensor
- 32: Bildaufnahmeeinheit
- 33: Analyseeinheit
- 34: Displayeinheit
- 36: Eingabetaste
- 38: Baustelle
- 42: Wand
- 44: Bauteil
- 46: Code
- 48: Bild
- 50: Arbeitsposition
- 52: Bohrloch
- 54: Soll-Arbeitsposition
- 100: Verfahren
- 110: Schritt
- 112: Schritt
- 114: Schritt
- 116: Schritt
- 118: Schritt

## Patentansprüche

1. **Werkzeugmaschinensystem** (10) für eine Baustelle (38), umfassend
- eine mobile Werkzeugmaschine (12), insbesondere ein Bauroboter, vorzugsweise zum Einsatz im Hoch- und/oder Tiefbau,
- wobei die mobile Werkzeugmaschine (12) zur Arbeit, insbesondere mit einem Werkzeug (14), an wenigstens einer Arbeitsposition (50) der Baustelle (38) eingerichtet ist,
- eine Steuereinheit (20) zur Steuerung der mobilen Werkzeugmaschine (12), umfassend eine Mikroprozessoreinheit (21) und eine Programmcodespeichereinheit (22), in der auf der Mikroprozessoreinheit (21) ausführbarer Programmcode speicherbar ist, sowie eine Bauteildatenspeichereinheit (24), in der wenigstens ein Bauteildatensatz zu wenigstens einem auf der Baustelle (38) zu verwendenden Bauteil (44) speicherbar ist, wobei die Steuereinheit (20) eingerichtet ist, die Arbeitsposition (50) anhand eines in der Bauteildatenspeichereinheit (24) gespeicherten Bauteildatensatzes zu bestimmen.

2. Werkzeugmaschinensystem nach dem vorhergehenden Anspruch, **dadurch gekennzeichnet, dass** die Steuereinheit (20) eingerichtet ist, die Arbeitsposition (50) unter Verwendung eines Baustellendatensatzes einer Baustellendatenspeichereinheit (26) zu bestimmen.

3. Werkzeugmaschinensystem nach einem der vorhergehenden Ansprüche, **dadurch gekennzeichnet, dass** die Steuereinheit (20) eingerichtet ist, die Arbeitsposition (50) unter Verwendung eines Regeldatensatzes einer Regeldatenspeichereinheit (28) zu bestimmen.

4. Werkzeugmaschinensystem nach einem der vorhergehenden Ansprüche, **dadurch gekennzeichnet, dass** die Steuereinheit (20) einen Erfassungssensor (30) zur Erfassung wenigstens eines Bauteildatensatzes und / oder eines Baustellendatensatzes aufweist.

5. Werkzeugmaschinensystem nach einem der vorhergehenden Ansprüche, **dadurch gekennzeichnet, dass** der Erfassungssensor (30) eine Bildaufnahmeeinheit (32) zur Aufnahme eines ein-, zwei- und / oder drei-dimensionalen Bildes (48) umfasst.

6. Werkzeugmaschinensystem nach einem der vorhergehenden Ansprüche, **dadurch gekennzeichnet, dass** die Steuereinheit (20) eine Analyseeinheit (33) zur Analyse des Bildes (48) umfasst.

7. Werkzeugmaschinensystem nach einem der vorhergehenden Ansprüche, **dadurch gekennzeichnet, dass** die mobile Werkzeugmaschine (12) zum Bohren, Hammerbohren und/oder Meißeln eingerichtet ist.

8. Werkzeugmaschinensystem nach einem der vorhergehenden Ansprüche, **dadurch gekennzeichnet, dass** die mobile Werkzeugmaschine (12) eingerichtet ist, das zur Ausführung der Arbeit zu verwendende Werkzeug (14) aus einem Satz von Werkzeugen (14) auszuwählen.

9. Werkzeugmaschinensystem nach einem der vorhergehenden Ansprüche, **dadurch gekennzeichnet, dass** wenigstens ein Element des Werkzeugmaschinensystems (10), insbesondere die mobile Werkzeugmaschine (12) oder die Steuereinheit (20) oder zumindest ein Teil der Steuereinheit (20), kabellos betreibbar ist.

10. Werkzeugmaschinensystem nach einem der vorhergehenden Ansprüche, **dadurch gekennzeichnet, dass** die Steuereinheit (12) eine Displayeinheit (34), insbesondere zur Darstellung eines Augmented-Reality-Bildes (48), aufweist.

11. **Verfahren** (100) zur Steuerung einer mobilen Werkzeugmaschine (10), vorzugsweise zum Einsatz im Hoch- und/oder Tiefbau, insbesondere zur Steuerung eines Bauroboters, auf einer Baustelle, wobei die mobile Werkzeugmaschine (10) zur Arbeit, insbesondere mit einem Werkzeug (14), an wenigstens einer Arbeitsposition (50) der Baustelle (38) eingerichtet ist, wobei die Arbeitsposition (50) anhand eines Bauteildatensatzes bestimmt wird.

12. Verfahren nach dem vorhergehenden Anspruch, **dadurch gekennzeichnet, dass** die Arbeitsposition (50) anhand eines Baustellendatensatzes bestimmt wird.

13. Verfahren nach einem der Ansprüche 11 bis 12, **dadurch gekennzeichnet, dass** die Arbeitsposition (50) dadurch ermittelt wird, dass eine vordefinierte Soll-Arbeitsposition (54), insbesondere unter Verwendung des Bauteildatensatzes, des Baustellendatensatzes und/oder des Regeldatensatzes, modifiziert wird.

14. Verfahren nach einem der Ansprüche 11 bis 13, **dadurch gekennzeichnet, dass** der Bauteildatensatz und / oder der Baustellendatensatz mittels eines Erfassungssensors (30) des Werkzeugmaschinensystems (10), insbesondere der Steuereinheit (20), ermittelt wird.
